(19) Europäisches Patentamt
European Patent Office
Office européen des brevets

(11) Publication number: 0 333 204 A2

(12) **EUROPEAN PATENT APPLICATION**

(21) Application number: 89104773.0

(51) Int. Cl.4: C08L 67/06 , C08L 61/26

(22) Date of filing: 17.03.89

(30) Priority: 17.03.88 JP 61898/88
11.07.88 JP 170988/88
14.07.88 JP 173976/88
26.08.88 JP 210570/88

(43) Date of publication of application:
20.09.89 Bulletin 89/38

(84) Designated Contracting States:
DE FR GB IT

(71) Applicant: NIPPON SHOKUBAI KAGAKU KOGYO CO. LTD.
1-1, Koraibashi, 4-chome
Chuo-ku Osaka-shi Osaka-fu(JP)

(72) Inventor: Minami, Kenji
A-5-105,8, Yamadanishi 2-chome
Suita-shi Osaka-fu(JP)
Inventor: Kawamura, Kiyoshi
3-33-301, Wakayamadai 2-chome
Simamoto-cho
Mishina-gun Osaka-fu(JP)
Inventor: Kuwamoto, Tomoyuki
4-52, Nakanoshima-cho
Suita-shi Osaka-fu(JP)
Inventor: Izubayashi, Masuji
6-4, Ichigaya-cho
Nishinomiya-shi Hyogo-ken(JP)
Inventor: Sano, Yoshinori
5-11, Ryugadai 7-chome Suma-ku
Kobe-shi Hyogo-ken(JP)

(74) Representative: Vossius & Partner
Siebertstrasse 4 P.O. Box 86 07 67
D-8000 München 86(DE)

(54) **Low-shrinkage thermosetting resin composition.**

(57) Disclosed herein is a low-shrinkage thermosetting resin composition which comprises a thermosetting resin and a polymer having in its molecule a functional group such as aziridine group, oxazoline group, and epoxy group. It undergoes only a small amount of volume shrinkage at the time of curing. This low shrinkage leads to superior dimensional stability, surface smoothness, and crack resistance. It provides molded articles free of discoloration and having a good surface gloss, without causing mold staining.

EP 0 333 204 A2

## LOW-SHRINKAGE THERMOSETTING RESIN COMPOSITION

The present invention relates to a thermosetting resin composition which undergoes only a small amount of shrinkage at the time of curing. More particularly, it is concerned with a thermosetting resin composition incorporated with a functional group-containing polymer which is uniformly dispersed in and separates out of said thermosetting resin matrix, thereby producing the effect of low shrinkage.

Thermosetting resin compositions such as unsaturated polyester resins have a disadvantage in that they undergo a large amount of shrinkage at the time of molding and curing, suffering from surface cracking and rippling which impair the surface smoothness. There has been proposed a means to overcome this disadvantage by incorporating the thermosetting resin matrix with a solution of a thermoplastic resin (such as polystyrene, polymethyl methacrylate, polyvinyl acetate, saturated polyester, ethylene-vinyl acetate copolymer, and polyurethane) in a monomer copolymerizable with the thermosetting resin, and causing the thermoplastic resin to separate out when the thermosetting resin is cured. This means is successful to some extent.

This conventional means, however, is not always satisfactory in the prevention of shrinkage. It often gives rise to a resin composition which is poor in storage stability and subject to discoloration and mold staining. These troubles occur when the thermoplastic resin added does not disperse well in the thermosetting resin matrix, the thermoplastic resin added oozes out, or the thermo-plastic resin added separates out unevenly. In other words, the conventional means to reduce shrinkage still has much room for improvement.

It is an object of the present invention to provide a low-shrinkage thermosetting resin composition which gives molded articles having a high dimensional accuracy on account of its very little shrinkage at the time of curing. It is another object of the present invention to provide a low-shrinkage thermosetting resin composition which gives molded articles having a good surface smoothness and gloss. It is further another object of the present invention to provide a low-shrinkage thermosetting resin composition which exhibits the low-shrinkage effect at the time of curing without causing discoloration and mold staining. These and other objects of the invention will become more apparent in the detailed description and examples which follow.

### DETAILED DESCRIPTION OF THE INVENTION

The above-mentioned object of the present invention is achieved by a low-shrinkage thermosetting resin composition which comprises a thermosetting resin [I] and a polymer [II] having in its molecule one or more than one kind of functional group selected from the group consisting of aziridine group, oxazoline group, epoxy group, N-hydroxyalkylamide group, and isocyanate group.

The polymer [II] in the present invention is not specifically limited so long as it has in its molecule one or more than one kind of functional group selected from the group consisting of aziridine group, oxazoline group, epoxy group, N-hydroxyalkylamide group, and isocyanate group. The polymer [II] can be produced by polymerizing a polymerizable monomer (a) having in its molecule the above-mentioned functional group, alone or, if necessary, in combination with the other polymerizable monomer (b).

The polymerizable monomer (a) that can be used for this purpose will be explained in the following with reference to its typical nonlimitative examples.

(1) Polymerizable monomer (a) having in its molecule an aziridine group and a reactive double bond.

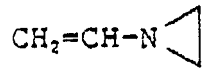

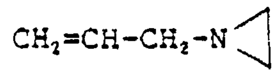

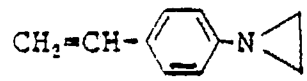

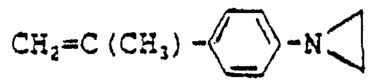

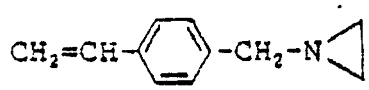

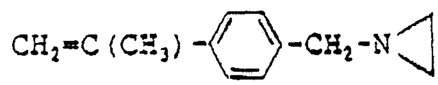

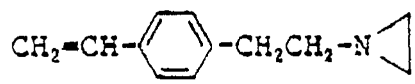

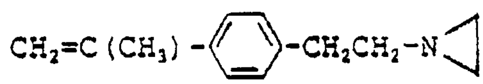

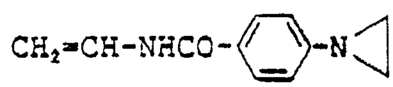

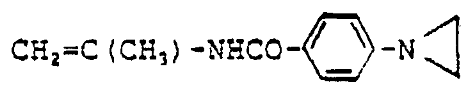

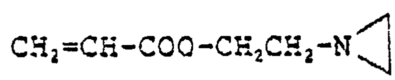

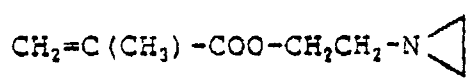

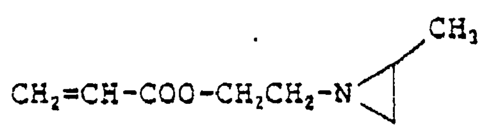

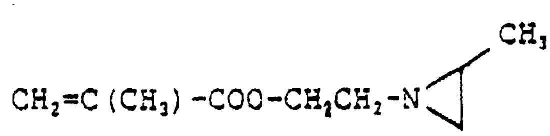

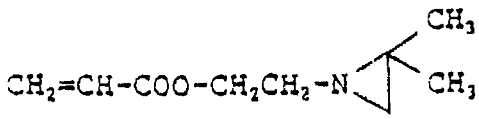

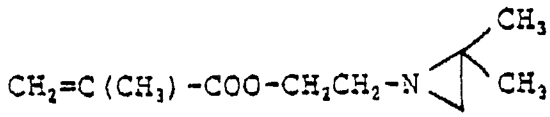

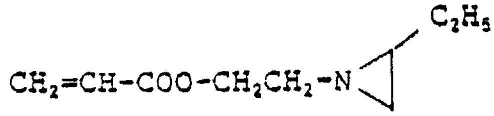

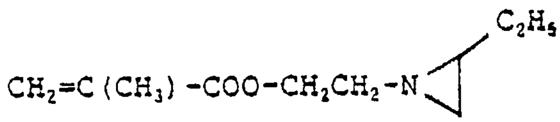

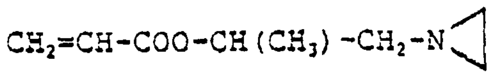

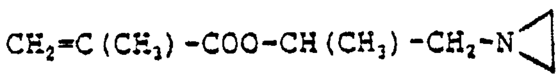

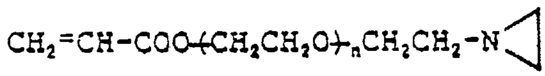

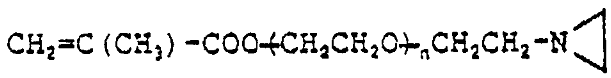

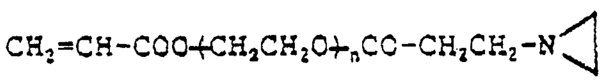

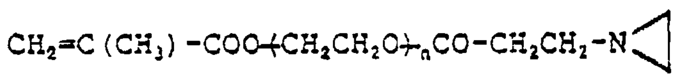

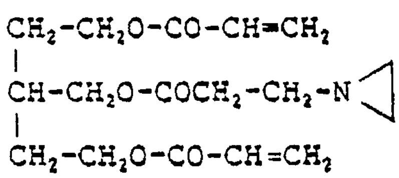

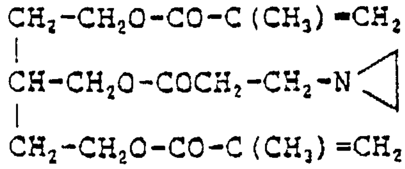

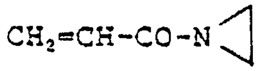

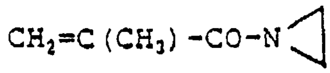

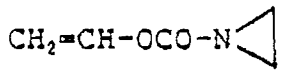

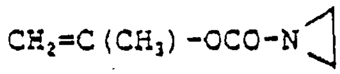

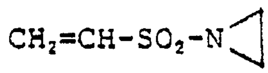

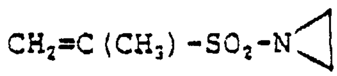

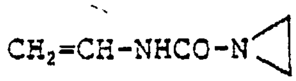

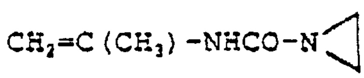

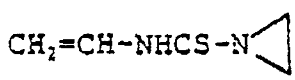

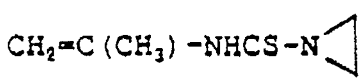

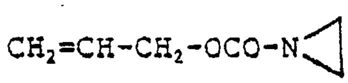

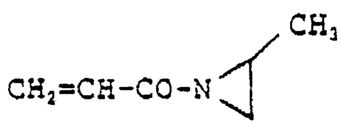

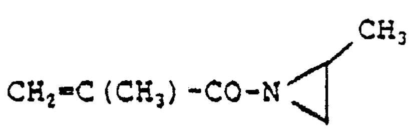

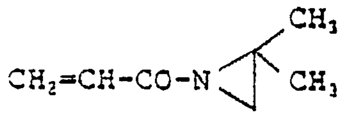

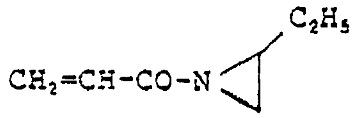

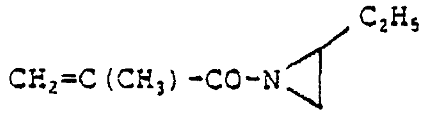

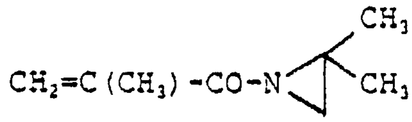

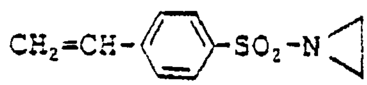

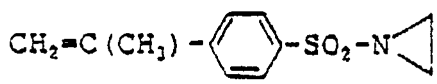

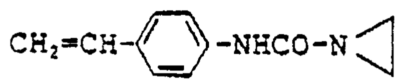

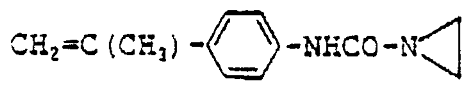

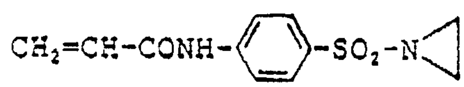

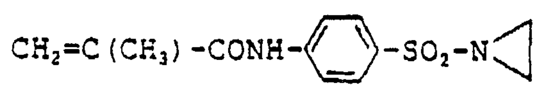

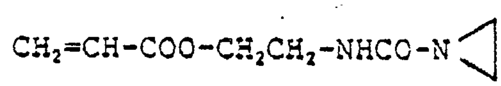

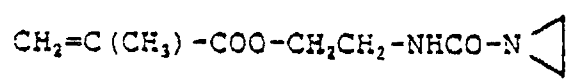

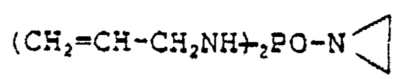

(n is preferably 0 or an integer of 1 to 20)

(2) Polymerizable monomer (a) having in its molecule an oxazoline group and a reactive double bond. 2-vinyl-2-oxazoline, 2-vinyl-4-methyl-2-oxazoline, 2-vinyl-5-methyl-2-oxazoline, 2-vinyl-4-ethyl-2-oxazoline, 2-vinyl-5-ethyl-2-oxazoline, 2-isopropenyl-2-oxazoline, 2-isopropenyl-4-methyl-2-oxazoline, 2-isopropenyl-5-methyl-2-oxazoline, 2-isopropenyl-4-ethyl-2-oxazoline, 2-isopropenyl-5-ethyl-2-oxazoline, and 2-isopropenyl-4,5-dimethyl-2-oxazoline.

(3) Polymerizable monomer (a) having in its molecule an epoxy group and a reactive double bond.

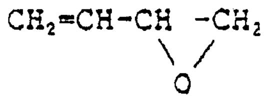

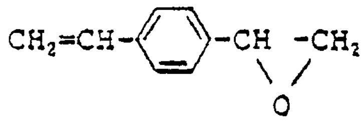

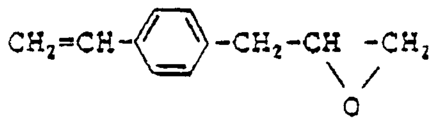

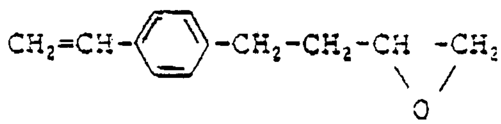

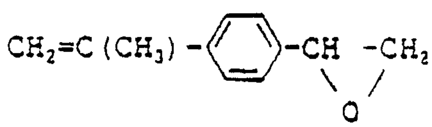

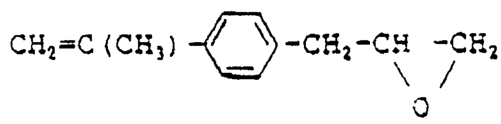

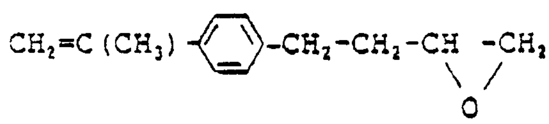

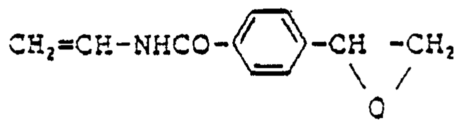

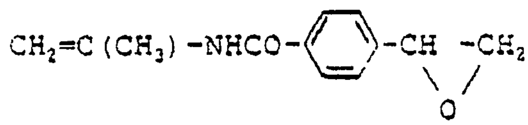

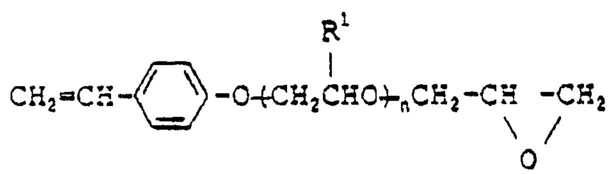

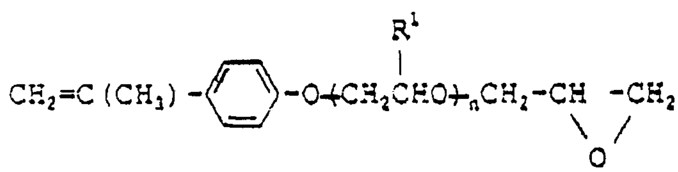

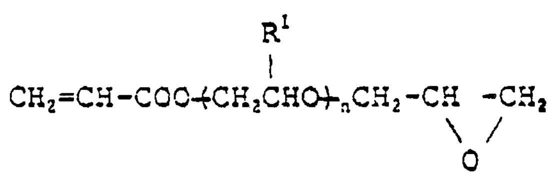

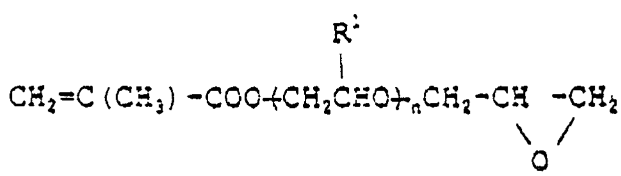

where $R^1$ denotes hydrogen or a methyl group; n is 0 or an integer of 1 to 20.

(4) Polymerizable monomer (a) having in its molecule an N-hydroxyalkylamide group and a reactive double bond. N-hydroxymethyl acrylamide, N-hydroxyethyl acrylamide, N-hydroxybutyl acrylamide, N-hydroxyisobutyl acrylamide, N-hydroxy-2-ethylhexyl acrylamide, N-hydroxychlorohexyl acrylamide, N-hydroxymethyl methacrylamide, N-hydroxyethyl methacrylamide, N-hydroxybutyl methacrylamide, N-hydroxyisobutyl methacrylamide, N-hydroxy-2-ethylhexyl methacrylamide, and N-hydroxychlorohexyl methacrylamide.

(5) Polymerizable monomer (a) having in its molecule an isocyanate group and a reactive double bond.

$$CH_2=CHCOOCH_2CH_2-NCO$$

$$CH_2=C(CH_3)COOCH_2CH_2-NCO$$

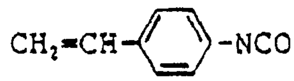

The foregoing describes the polymerizable monomer (a) as having in its molecule an aziridine group, oxazoline group, epoxy group, N-hydroxylalkylamide group, or isocyanate group. However, it may have two or more groups selected from the above-mentioned five groups and a reactive double bond.

In addition, the foregoing describes the polymerizable monomer (a) as having in its molecule a reactive double bond. However, it may have two or more reactive double bonds which are conjugated or not conjugated.

The polymer [II] used as the shrinkage reducing agent in the present invention includes the following three kinds of polymers.

(A) Homopolymer composed of only one kind of monomer selected from the polymerizable monomers (a).

(B) Copolymer composed of two or more than two kinds of monomers selected from the polymerizable monomers (a).

(C) Copolymer composed of one or more than one kind of monomer selected from the polymerizable monomers (a) and one or more than one kind of polymerizable monomer having a reactive double bond but having none of the five functional groups specified in the present invention. (The latter monomer is referred to as "polymerizable monomer (b) hereinafter.)

The above-mentioned copolymer (B) and (C) may be random copolymers, block copolymers, or graft copolymers. The copolymer (C) should contain the polymerizable monomer (a) (as the repeating unit in the polymer [II]) in an amount more than 0.1 wt%, preferably more than 0.5 wt%, and more preferably more than 1.0 wt%. The content of the polymerizable monomer (a) has no upper limit as will be understood from the fact that homopolymer (A) and copolymer (B) can be used in the invention. However, it should be lower than 50 wt%, preferably lower than 20 wt%, from the standpoint of handling performance and production cost.

The polymerizable monomer (b) is not specifically limited so long as it is copolymerizable with the polymerizable monomer (a). It includes, for example, styrene monomers (such as styrene, *o*-methylstyrene, *m*-methylstyrene, *p*-methylstyrene, α-methylstyrene, *p*-methoxystyrene, *p-tert*-butylstyrene,*p*-phenylstyrene, *o*-chlorostyrene, m-chlorostyrene, p-chlorostyrene, and divinylbenzene), acrylic acid and methacrylic acid monomers (such as acrylic acid, methyl acrylate, ethyl acrylate, *n*-butyl acrylate, isobutyl acrylate, dodecyl acrylate, stearyl acrylate, 2-ethylhexyl acrylate, trimethylolpropane acrylate, methacrylic acid, methyl methacrylate, ethyl methacrylate, propyl methacrylate, *n*-butyl methacrylate, isobutyl methacrylate, *n*-octyl methacrylate, dodecyl methacrylate, 2-ethylhexyl methacrylate, stearyl methacrylate, and trimethylpropane trimethacrylate), ethylene, propylene, butylene, vinyl chloride, acrylonitrile, acrylamide, methacrylamide, and N-vinylpyrrolidone, maleimide monomers (such as maleimide, N-methylmaleimide, N-ethylmaleimide, N-propylmaleimide, N-butylmaleimide, N-cyclohexylmaleimide, N-phenylmaleimide,N-naphtylmaleimide, N-laurylmaleimide, N-tribromophenylmaleimide etc.), These monomers may be used alone or in combination with one another.

The above-mentioned polymerizable monomers (a) and (b) can be made into the polymer [II] by any known polymerization method such as bulk polymerization, suspension polymerization, emulsion polymerization, precipitation polymerization, and solution polymerization. The polymer [II] is not specifically limited in molecular weight. However, it should preferably have a number-average molecular weight higher than 10,000 from the standpoint of mold staining.

The thermosetting resin [I] used in the present invention is not specifically limited. It may include any known thermosetting resins and photo-curable resins which exist now and will be developed in the future. Preferable among them are those which are formed by radical polymerization from a compound having a polymerizable unsaturated group in its molecule and a molecular weight higher than 200 and a polymerizable monomer (c). The polymerizable monomer (c) includes those monomers illustrated in the foregoing explanation for the polymerizable monomer (b).

Preferred examples of the thermosetting resin [I] include unsaturated polyester resins which are composed of an unsaturated polyester obtained from an unsaturated dibasic acid (or a mixture of an unsaturated dibasic acid and a saturated dibasic acid) and a polyhydric alcohol by condensation reaction at an elevated temperature in an inert gas stream and the polymerizable monomer (c) typified by styrene; vinyl ester resins which are composed of epoxy (meth)acrylate obtained by the reaction of a polyfunctional epoxy compound with (meth)acrylic acid and the polymerizable monomer (c) such as styrene and methyl methacrylate; resins composed of polyester (meth)acrylate or polyurethane (meth)acrylate and the polymerizable monomer (c); and amino resins.

The amino resins used in the present invention are those which are obtained by any known process. They include a liquid amino resin precondensate or a solid amino resin precondensate obtained by dehydration of the former. The precondensate is obtained by the reaction of one or more than one kind of amino compound (such as urea, melamine, benzoguanamine, and cyclohexane carboguanamine) and a formaldehyde (such as formalin and paraformaldehyde) in a prescribed molar ratio under a neutral or alkaline condition adjusted with an alkaline substance (such as ammonium carbonate, sodium hydroxide, ammonia, and hexamethylenetetramine). Moreover, the amino resins used in the present invention include those in which part of the amino compound is replaced by a guanamine, ketone, and/or phenol during production which is performed in the usual way.

The low-shrinkage thermosetting resin composition of the present invention is formed by incorporating the thermosetting resin [I] with the polymer [II]. The incorporation can be accomplished easily in the same manner as used when a thermosetting resin is incorporated with a shrinkage reducing agent. According to one method, the thermosetting resin [I] is directly mixed by stirring with the polymer [II] in the form of fine powder, solution, emulsion, or suspension. According to the other method, the thermosetting resin [I] and the polymer [II] are dissolved or dispersed in a polymerizable monomer as a diluent.

The amount of the polymer [II] to be added to the thermosetting resin [I] is not specifically limited. It may vary over a broad range depending on the desired properties of the thermosetting resin composition. For the thermosetting resin composition to have satisfactory low-shrinkage without losing the inherent characteristic properties of the thermosetting resin [I], the amount of the polymer [II] in the thermosetting resin composition should be 0.05 to 50 wt%, preferably 0.1 to 40 wt%, and more preferably 1 to 30 wt%.

The scope of the present invention embraces not only the simple mixing of the thermosetting resin [I] and the polymer [II] but also the mixing of the thermosetting resin [I] with an inorganic filler coated with the polymer [II].

The inorganic filler is not specifically limited. It includes, for example, calcium carbonate, talc, kaolin, bentonite, white carbon, alumina, asbestos, sericite, glass, titanium oxide, barium sulfate, barium carbonate, and aluminum hydroxide. Of these inorganic fillers, calcium carbonate is desirable because of its availability and affinity for the polymer [II]. In other words, it is readily available because it is commonly used as a filler for plastics, rubber, and paper. In addition, it can be uniformly treated with the polymer [II] on account of its good affinity and the treated filler can be uniformly dispersed into the thermosetting resin [I]. This contributes to the low-shrinkage thermosetting resin composition which is very little subject to shrinkage, discoloration, and mold staining at the time of curing.

The polymer [II] that can be used for the surface treatment of the inorganic filler includes all of the above-mentioned polymer [II]. Those which contain an oxazoline group or epoxy group are preferable from the standpoint of affinity for the inorganic filler.

The surface treatment of the inorganic filler with the polymer [II] is accomplished by mixing the two components. They may also be mixed with polymer components other than the polymer [II], polymerizable monomers, and organic solvents. For example, 100 parts by weight of the inorganic filler should be mixed with 5-400 parts by weight, preferably 20-300 parts by weight of the polymer [II] and, if necessary, less than 200 parts by weight of other polymer components than the polymer [II], less than 200 parts by weight of polymerizable monomers, and less than 200 parts by weight of organic solvents. The mixing should be performed at a temperature lower than 350 °C, preferably from 70 °C to 300 °C.

The polymer [II] and/or the inorganic filler coated with the polymer [II] which has been prepared as mentioned above is incorporated, alone or in combination with an untreated inorganic filler, into the thermosetting resin [I] to give the low-shrinkage thermosetting resin composition of the present invention. The mixing method and mixing ratio are as mentioned above. The amount of the inorganic filler treated or not treated with the polymer [II] should be 0.05 to 50 wt%, preferably 0.1 to 30 wt% of the low-shrinkage thermosetting resin composition so that it reduces the shrinkage without impairing the inherent characteristic properties of the thermosetting resin [I].

The low-shrinkage thermosetting resin composition of the present invention can be cured by a known process. In other words, it is incorporated with 0.1 to 5 wt% of polymerization catalyst and, if necessary, 0.1

to 5 wt% of polymerization promoter. Examples of the polymerization catalyst include organic peroxides (such as benzoyl peroxide, methyl ethyl ketone peroxide, *t*-butylperoxy benzoate, *t*-butylperoxy octoate, dicumyl peroxide, cumene hydroxy peroxide, cyclohexanone peroxide, and lauroyl peroxide) and nitriles (such as azobisisobutyronitrile) which generate radicals. Examples of the polymerization promoter include cobalt naphthenate, cobalt octenate, manganese naphthenate, and dimethylaniline.

As mentioned above, the low-shrinkage thermosetting resin composition of the present invention is composed of the thermosetting resin [I] and the specific polymer [II] (which may be in the form of surface coating on an inorganic filler). Since it contains the polymer [II] extremely uniformly and stably dispersed therein, it does not cause discoloration and mold staining and is very little subject to shrinkage.

It is considered that the low-shrinkage is attributable to the unique structure of the composition in which the thermosetting resin [I] contains the polymer [II] uniformly dispersed therein after curing. This structure may be presumed by the fact that when the composition alone (without any pigment, filler, and reinforcement) is cured by a curing catalyst, the resulting molded article takes on a translucent or milky white color. The structure will be more apparent by observing the rupture cross-section of the molded item directly under an electron microscope. The rupture cross-section shows dispersed particles which are apparently different from the thermosetting resin [I]. No complete elucidation has been made yet on the relation between the above-mentioned structure and the outstanding properties of the thermosetting resin composition. It is considered as follows: The thermosetting resin [I] shrinks when it is cured, whereas the polymer [II] which is uniformly dispersed in the former expands, thereby offsetting the shrinkage, reducing the internal strain caused by curing, and relieving the concentration of external stresses. This effect is enhanced in the case where the thermosetting resin [I] is reactive with the functional groups int he polymer [II]. In this case, the thermosetting resin [I] firmly combines with the particles of the polymer [II], producing the reinforcing effect.

The low-shrinkage thermosetting resin composition of the present invention can be used effectively as such; however, it can be incorporated with fillers (such as calcium carbonate, silica sand, barium sulfate, clay, and glass power), reinforcements (such as glass fiber, asbestos, jute, vinylon fiber, and carbon fiber), thickeners (such as magnesium oxide, magnesium hydroxide, calcium hydroxide, and calcium oxide), and coloring agents, and, if necessary, cure accelerator and other known additives. The thus formulated compound may be used in the form of bulk molding compound (BMC) and sheet molding compound (SMC), which will be made into decorative laminates, septic tanks, night-soil reservoir, storage tanks, automotive parts, electric parts, and adhesives. For use as BMC, the resin composition of the present invention is mixed with calcium carbonate, magnesium oxide, chopped strand, coloring agent, zinc stearate, and curing catalyst using a mixing machine, and the resulting mixture is metered into a mold in which the mixture is cured with heating under pressure into a molded article. For use as SMC, the resin composition of the present invention is mixed with a thickener, mold release, polymerization catalyst, and filler to give a comparatively viscous liquid mixture, with which a previously molded glass fiber sheet is impregnated. The resin mixture is thickened until it loses fluidity and the sheet becomes rigid. The sheet is placed in a mold and cured with heating under pressure to give a desired molded article.

The molded items thus obtained have a smooth surface and good gloss with no discoloration. In addition, they undergo very little volume shrinkage at the time of curing, and therefore, they are free of strain and cracks. They also do not stain the mold at the time of molding.

The low-shrinkage thermosetting resin composition of the present invention provides improved dimensional stability, crack resistance, fabrication quality, heat resistance, and aging resistance without impairing the inherent characteristic properties of the thermosetting resin [I].

Moreover, the low-shrinkage thermosetting resin composition of the present invention produces good results when used as an adhesive, especially when applied to wooden materials. It is by far more durable than conventional ones because of its good water resistance and crack resistance which prevent the wooden materials from expanding or shrinking, causing cracks and decreasing the bond strength, when the ambient temperature and humidity change.

## EXAMPLES

The invention will be described in more detail with reference to the following Referential Examples and Examples, which are not intended to restrict the scope of the invention. In the examples, "parts" and "%" mean "parts by weight" and "wt%", respectively, unless otherwise indicated.

The referential examples demonstrate the process for producing the polymer [II] having a functional

group such as aziridine group, and the comparative referential examples demonstrate the process for producing the polymer [II′] which has no functional groups. The examples demonstrate the process for producing the thermosetting resin [I], the process for producing the low-shrinkage thermosetting resin composition of the invention by incorporating the thermosetting resin [I] with the polymer [II] obtained in the referential examples, and the process for making the thus obtained thermosetting resin composition into molded articles. The comparative examples demonstrate the process for producing the thermosetting resin composition from the thermosetting resin [II] and a commercial polymer or the polymer [II′] obtained in the comparative referential polymer which contains no functional group, in place of the polymer [II].

Referential Example 1

In a flask equipped with an inert gas inlet tube, reflux condenser, and thermometer were placed 400 parts of deionized water in which are dissolved 0.2 parts of polyvinyl alcohol. To the flask was further added a previously prepared mixture composed of 196 parts of styrene, 4 parts of isopropenyl oxazoline, and 2 parts of benzoyl peroxide. The reactants were made into a uniform suspension by vigorous agitation. The suspension was heated to 80°C while blowing nitrogen gas. Stirring was continued for 5 hours at this temperature to carry out polymerization. Upon cooling, there was obtained a polymer suspension. The suspension was filtered and the filter cake was washed and dried to yield the polymer [II-1] having an oxazoline group as the functional group. The number-average molecular weight of the polymer and 40,000.

Referential Example 2

The same procedure as in Referential Example 1 was repeated except that the polymerizable monomers were replaced by 150 parts of styrene, 45 parts of methyl methacrylate, and 5 parts of glycidyl methacrylate. Thus, there was obtained the polymer [II-1] having an epoxy group as the functional group. The number-average molecular weight of the polymer was 45,000.

Referential Example 3

In the same flask as used in Referential Example 1 were placed 200 parts of toluene and 200 parts of methyl isobutyl ketone. The content was heated to 80°C while blowing nitrogen gas. To the flask was further added dropwise a previously prepared mixture composed of 190 parts of styrene, 10 parts of 2-(1-aziridinyl)ethyl methacrylate from a dropping funnel over 2 hours. Stirring was continued for 5 hours to carry out polymerization. Upon cooling, there was obtained a polymer solution. To this polymer solution (100 parts)were added 2000 parts of methanol for reprecipitation. Thus,there was obtained the polymer [II-3] having an aziridine group as the functional group. The number-average molecular weight of the polymer was 20,000.

Referential Example 4

The same procedure as in Referential Example 2 was repeated except that the amount of benzoyl peroxide was changed from 2 parts to 16 parts. Thus,there was obtained the polymer [II-4] having an epoxy group as the functional group. The number-average molecular weight of the polymer was 9,000.

Referential Example 5

In a reactor equipped with a thermometer, stirrer, reflux condenser, and dropping funnel were placed 800 parts of water. In this water were dissolved with stirring 6 parts of partially saponified polyvinyl alcohol having a degree of saponification of 87-89 mol% and a degree of polymerization of 500. To the reactor was further added dropwise a mixture composed of 47 parts of methyl methacrylate, 140 parts of styrene, and 1 part of azobisisobutyronitrile. With the space in the reactor replaced with nitrogen, the reactor was heated to 65°C. The initiation of the reaction was confirmed by the generation of polymerization heat. The reaction was continued for 2 hours at 70°C until a suspension of vinyl polymer was obtained. After cooling, the

suspension of vinyl polymer was filtered and the filter cake was dried in a hot air drier at 50 °C. The dried filter cake was crushed by a hammer mill. Thus,there was obtained the polymer [II-5] in the form of fine white powder passing 100 mesh.

Referential Examples 6 to 8 and Comparative Referential Examples 1 and 2

The same procedure as in Referential Example 4 was repeated except that the composition of the polymerizable monomers was changed as shown in Table 1. Thus,there were obtained the polymers [II-6], [II-7], and [II-8], and the comparative vinyl polymers [II′-1] and [II′-2].

Table 1

| | Referential Example 6 | Referential Example 7 | Referential Example 8 | Comparative Referential Example 1 | Comparative Referential Example 2 |
|---|---|---|---|---|---|
| Polymer | [II-8] | [II-7] | [II-8] | [II′-1] | [II′-2] |
| Monomer composition (parts) | | | | | |
| Methyl methacrylate | 160 | 187 | 172 | 60 | 200 |
| Methyl acrylate | 27 | 6.5 | - | - | - |
| Styrene | - | - | 10 | 140 | - |
| Isophenyl oxazoline | 13 | - | - | - | - |
| Glycidyl methacrylate | - | 6.5 | - | - | - |
| 2-N-aziridinyl ethyl methacrylate | - | - | 18 | - | - |
| Azobisisobutyronitrile | 1.0 | 0.8 | 1.0 | 1.0 | 0.8 |
| Rate of polymerization | 99.3 | 99.6 | 99.8 | 99.7 | 99.7 |

Referential Example 9

In the same reactor as used in Referential Example 5 were placed 160 parts of water and 6.4 parts of sodium dodecylbenzenesulfonate. The reactor was heated to 55 °C while supplying nitrogen gas. To the reactor were added dropwise over 2 hours a previously prepared monomer mixture composed of 56 parts of methyl methacrylate, 93.6 parts of butyl acrylate, and 10.4 parts of glycidyl methacrylate, and 4 parts of 10% aqueous solution of ammonium persulfate and 1 part of 10% aqueous solution of sodium hydrogen sulfite. Reaction was performed at 60 °C for 2 hours. Thus,there was obtained the polymer [II-9] in the form of aqueous dispersion.

Referential Example 10

Forty parts of the polymer [II-1] obtained in Referential Example 1 were mixed with 20 parts of fine light calcium carbonate ("Hakuenka PZ" made by Shiraishi Kogyo Co., Ltd.) at 160 °C and 100 rpm using a Labo-plastomill (made by Toyo Seiki Co., Ltd.) After cooling, the mixture was crushed. Thus,there was obtained the surface-treated inorganic filler (1).

Referential Example 11

Forty parts of the polymer [II-2] obtained in Referential Example 2 were mixed with 20 parts of heavy calcium carbonate ("NS-100" made by Nitto Funka Kogyo Co., Ltd.) at 210 °C and 100 rpm. After cooling,

the mixture was crushed. Thus,there was obtained the surface-treated inorganic filler (2).

Referential Example 12

Forty parts of the polymer [II-3] obtained in Referential Example 3 were mixed with 20 parts of precipitated barium sulfate (made by Sakai Kagaku Kogyo Co., Ltd.) in the same manner as in Referential Example 10. After cooling, the mixture was crushed. Thus,there was obtained the surface-treated inorganic filler (3).

Referential Example 13

In the same flask as used in Referential Example 1 were placed 200 parts of linear saturated polyester having terminal carboxyl groups, having a molecular weight Mn = 6000, and containing 50% of non-volatile matters ("Arrow-plats OB-63" made by Nippon Shokubai Kagaku Kogyo Co., Ltd.) and 3.60 parts of 2-*p*-phenylene-bis-2-oxazoline. Reaction was carried out at 110 °C for 2 hours. Thus,there was obtained a solution of a polymer having a terminal oxazoline group (with 50% volatile matter).

Eighty parts of this polymer solution were mixed with 20 parts of heavy calcium carbonate ("NS-100" made by Nitto Funka Kogyo Co., Ltd.) using a Labo-plastomill at 160 °C and 100 rpm. The mixture was free of solvent, dried, and crushed. Thus,there was obtained the surface-treated inorganic filler (4).

Comparative Referential Example 3

The same procedure as in Referential Example 1 was repeated to give the comparative polymer [II′-3], except that the polymerizable monomer mixture (196 parts of styrene and 4 parts of 2-isopropenyl-2-oxazoline) was replaced by 200 parts of styrene. The thus obtained polymer [II′-3] was treated in the same manner as in Referential Example 10 to give the comparative surface-treated inorganic filler (1′).

Comparative Example 4

The same procedure as in Referential Example 2 was repeated to give the comparative polymer [II′-4], except that the polymerizable monomer mixture was replaced by the one composed of 150 parts of styrene and 50 parts of methyl methacrylate. The thus obtained polymer [II′-4] was treated in the same manner as in Referential Example 2 to give the comparative surface-treated inorganic filler (2′).

Example 1

An unsaturated polyester having an acid value of 20 was obtained from 50 parts of isophthalic acid, 70 parts of maleic anhydride, 34 parts of ethylene glycol, and 38 parts of propylene glycol by the esterification reaction at 200 °C for 24 hours under a nitrogen stream. This unsaturated polyester (40.6 parts) was mixed with 50.4 parts of styrene to give the unsaturated polyester resin [I-1].

One hundred parts of this unsaturated polyester resin [I-1] were mixed with 18 parts of the polymer [II-1] obtained in Referential Example 1 to give the low-shrinkage thermosetting resin composition (1).

The thus obtained resin composition (1) was mixed by stirring with 1 part of t-butyl peroxybenzoate, 3 parts of zinc stearate, blue toner ("KP-5E326" made by Sumika Color Co., Ltd.), and 100 parts of calcium carbonate. The resulting paste was mixed with 1.0 part of magnesium oxide to give an impregnant. With this impregnant were impregnated 70.7 parts of glass fiber (25 mm long). The impregnated glass fibers were made into a sheet between two polyethylene films. After aging at 40 °C for 40 hours, there was obtained a SMC. This SMC underwent press molding using a mold measuring 300 mm by 300 mm, at 140 °C and 50 kg/cm$^2$, for 4 minutes. Thus,there was obtained a 2-mm thick flat plate.

The molding shrinkage of this SMC was 0.06% when measured according to JIS K-6911. The surface of the molded item was tested for gloss using a surface gloss meter. The reflectance at the incident angle of 60° was 87.5%. The molded item was examined for discoloration and the mold was examined for mold staining. The discoloration and mold staining were given any one of four rankings - good, fair, poor, and

bad. The results are shown in Table 2.

Examples 2 to 4

The same procedure as in Example 1 was repeated except that the polymer [II-1] was replaced by the polymers [II-2], [II-3], and [II-4] obtained in Referential Examples 2 to 2, respectively. Thus,there were obtained low-shrinkage thermosetting resin compositions (2) to (4) . They were made into SMC and the SMC was made into a molded article in the same manner as in Example 1. The performance of the molded article was evaluated. The results are shown in Table 2.

Comparative Examples 1 and 2

The same procedure as in Example 1 was repeated to give the comparative resin compositions (1) and (2), except that the polymer [II-1] was replaced by a commercial polystyrene-based shrinkage reducing agent and a commercial polyvinyl acetate-based shrinkage reducing agent. They were made into SMC and the SMC was made into a molded article in the same manner as in Example 1. The performance of the molded article was evaluated. The results are shown in Table 2.

Table 2

| | Example No. | | | | Compar. Example | |
|---|---|---|---|---|---|---|
| | 1 | 2 | 3 | 4 | 1 | 2 |
| Resin composition | (1) | (2) | (3) | (4) | - | - |
| Comparative resin composition | - | - | - | - | (1) | (2) |
| Shrinkage reducing agent | Polymer [II-1] | Polymer [II-2] | Polymer [II-3] | Polymer [II-4] | polystyrene | polyvinyl acetate |
| Molding shrinkage (%) *1 | 0.06 | 0.08 | 0.08 | 0.08 | 0.13 | 0.18 |
| Gloss (%) *2 | 87.3 | 85.1 | 96.1 | 86.3 | 82.6 | 78.9 |
| Discoloration *3 | good | good | good | good | poor | poor |
| Mold staining *4 | good | good | good | fair | poor | poor |

Note 1. Measured according to JIS K-6911.
Note 2. Reflectance at the incident angle of 60°.
Note 3. good: no discoloration, fair: slight discoloration, poor: discoloration, bad: severe discoloration.
Note 4. good: no mold staining, fair: slight mold staining, poor: mold staining, bad: severe mold staining.

It is noted from Table 2 that the low-shrinkage thermosetting resin composition of the present invention has a lower molding shrinkage than the conventional thermosetting resin composition containing the conventional shrinkage reducing agent. In addition, it does not cause mold staining at the time of molding, and provides molded articles free of discoloration and having a high surface gloss.

Example 5

In a reactor equipped with a thermometer, stirrer, and reflux condenser were placed 600 parts of

melamine, 1160 parts of 37% formalin, and 6.0 parts of 28% ammonia water. Reaction was carried out at 70°C for 130 minutes. Thus,there was obtained the amino resin [I-2] in the form of clear resin solution.

1028 parts of the solution of the amino resin [I-2] were mixed with 440 parts of pulp sheet using a kneader at 45-55°C for 30 minutes. The resulting mixture was dried in a hot-air drier at 70°C for 4 hours. The dried product (100 parts) was crushed together with 10 parts of the polymer [II-5] obtained in Referential Example 5, 0.05 parts of phthalic anhydride, 0.5 parts of zinc stearate, and 1.0 part of titanium oxide (as a pigment) for 24 hours using a ball mill. Thus there was obtained the low-shrinkage thermosetting resin composition (5). It was tested for performance by molding into a 1-mm thick molded article by compression at a mold temperature of 150°C and a molding pressure of 150 kg/cm$^2$ for 1 minute. The results are shown in Table 3.

Example 6

The same procedure as in Example 5 was repeated except that the polymer [II-5] was replaced by the polymer [II-6] obtained in Referential Example 6. Thus,there was obtained the low-shrinkage thermosetting resin composition (6). It was tested for performance by carrying out the molding in the same manner as in Example 5. The results are shown in Table 3.

Example 7

The same procedure as in Example 5 was repeated except that the polymer [II-5] was replaced by the polymer [II-7] obtained in Referential Example 7. Thus there was obtained the low-shrinkage thermosetting resin composition (7). It was tested for performance by carrying out the molding in the same manner as in Example 5. The results are shown in Table 3.

Example 8

The same procedure as in Example 5 was repeated except that the polymer [II-1] was replaced by the polymer [II-8] obtained in Referential Example 8. Thus,there was obtained the low-shrinkage thermosetting resin composition (8). It was tested for performance by carrying out the molding in the same manner as in Example 5. The results are shown in Table 3.

Comparative Example 3

The same procedure as in Example 5 was repeated except that the polymer [II-1] was replaced by the polymer [II′-1] obtained in Comparative Referential Example 1. Thus,there was obtained the low-shrinkage thermosetting resin composition (1′). It was tested for performance by carrying out the molding in the same manner as in Example 5. The results are shown in Table 3.

Comparative Example 4

The same procedure as in Example 5 was repeated except that the polymer [II-1] was replaced by the polymer [II′-2] obtained in Comparative Referential Example 2. Thus,there was obtained the low-shrinkage thermosetting resin composition (2′). It was tested for performance by carrying out the molding in the same manner as in Example 5. The results are shown in Table 3.

Comparative Example 5

The same procedure as in Example 5 was repeated except that the polymer [II-1] was not used. Thus,there was obtained the low-shrinkage thermosetting resin composition (3′). It was tested for performance by carrying out the molding in the same manner as in Example 5. The results are shown in Table 3.

Table 3

| | Example 5 | Example 6 | Example 7 | Example 8 | Comparative Example 3 | Comparative Example 4 | Comparative Example 5 |
|---|---|---|---|---|---|---|---|
| Low-shrinkage thermosetting resin composition | (5) | (6) | (7) | (8) | (1') | (2') | (3') |
| Boiling water absorption (%) | 0.427 | 0.440 | 0.415 | 0.428 | 0.563 | 0.492 | 0.613 |
| Rockwell hardness (M scale) | 107 | 105 | 108 | 108 | 108 | 107 | 113 |
| Flexural strength ($kg/cm^2$) | 13.7 | 13.4 | 13.9 | 13.2 | 11.5 | 13.0 | 12.9 |
| Charpy impact strength ($kg \bullet cm/cm^2$) | 4.2 | 4.0 | 4.5 | 4.3 | 3.7 | 3.8 | 3.5 |
| Molding shrinkage (%) | 0.255 | 0.247 | 0.236 | 0.241 | 0.305 | 0.287 | 0.472 |
| Post-shrinkage (%) | 0.543 | 0.625 | 0.525 | 0.536 | 0.885 | 0.650 | 1.080 |
| Insert crack resistance | 30 up | 30 up | 30 up | 30 up | 7 - 10 | 9 - 15 | 1 - 3 |
| Insulation resistance, after boiling (Ω) | $3.7 \times 10^9$ | $3.8 \times 10^9$ | $3.7 \times 10^9$ | $3.5 \times 10^9$ | $2.5 \times 10^9$ | $3.2 \times 10^9$ | $0.5 \times 10^9$ |

Test Methods

- Boiling water absorption: according to JIS K-6911-1970.
- Rockwell hardness: according to JIS K-6911-1970.
- Flexural strength: according to JIS K6911-1970.
- Charpy impact strength: JIS K-6911-1970.
- Molding shrinkage: JIS K-6911-1970.
- Post shrinkage: The shrinkage that takes place when the molded item is allowed to stand at 100 °C for 20 hours is measured in the same manner as used for measuring the molding shrinkage.
- Insert crack resistance: A discoid test piece, 60 mm in diameter and 10 mm thick, is molded, with a mild steel disk, 50 mm in diameter and 4 mm thick, inserted therein at the center thereof, with one side thereof exposed. The test piece is heated (at 100 °C for 1 hour) and cooled (at 25 °C for 1 hour) repeatedly until it is cracked, and the number of cycles of heating and cooling is recorded.
- Insulation resistance (after boiling): according to JIS K-6911-1970.

It is noted from Table 3 that the amino resin molding material pertaining to the present invention is improved in dimensional stability and insert crack resistance without any loss of the inherent characteristic properties of the conventional amino resin molding material.

Example 9

In the same reactor as used in Example 5 were placed 374.4 parts of benzoguanamine, 324 parts of 37% formalin, and 1.4 parts of 10% aqueous solution of sodium carbonate. Reaction was carried out at 90 °C for 2 hours. The reaction product was concentrated by heating under normal pressure until it reached 130 °C. Thus,there was obtained a clear viscous liquid resin. Upon cooling, there was obtained a colorless, transparent glass-like solid resin. Upon crushing, there was obtained the amino resin [I-3] in the form of powder.

37.5 parts of the amino resin [I-3] were dissolved in 50 parts of acetone. To the solution were added 25 parts of the dispersion of the polymer [II-9] obtained in Referential Example 9, 0.3 parts of *p*-toluenesulfonic acid, and 0.375 parts of lauric acid. Thus,there was obtained the low-shrinkage thermosetting resin composition (9) in the form of a milky white solution. With this solution was impregnated a piece of 10-mil cotton linter paper. The wet paper was air-dried and then dried with hot air at 85 °C for 15 minutes. Thus,there was obtained impregnated cotton linter paper containing 57.2 wt% of resin and 4.8 wt% of volatile matter (on heating at 150 °C for 10 minutes). Seven sheets of this impregnated paper were pressed between hot plates at 150 °C under a presure of 40 $kg/cm^2$ for 10 minutes. Thus,there was obtained a 1.62 mm thick laminate. This laminate was found to have an insulation resistance of $4.7 \times 10^{12}$ Ω in the normal state and $5.6 \times 10^9$ Ω after boiling for 2 hours (measured according to JIS K-6911-1970). It was also found to have an arc resistance of 152 seconds. The laminate was tested for punchability according to ASTM D-617. It was found to have good punchability at normal temperature.

Example 10

In the same reactor as used in Example 5 were placed 200 parts of benzoguanamine, 466 parts of melamine, 1072 parts of 37% formalin, and 4.2 parts of 10 wt% aqueous solution of sodium carbonate. Reaction was carried out at 80 °C for 3 hours. There was obtained the amino resin [I-4] in the form of clear solution (containing 62% of solids). 92.0 parts of the amino resin solution were mixed with 7.8 parts of the aqueous dispersion of the polymer [I-9] obtained in Referential Example 9, 10.0 parts of wheat flour, and 0.5 parts of ammonium chloride. Thus there was obtained a liquid adhesive.

The liquid adhesive was applied to both sides of a 1.4 mm thick lauan veneer (core) at a spread of 350 $g/m^2$. The core was interposed between two 0.9 mm thick lauan veneers at right angles, followed by cold pressing at 10 $kg/cm^2$ for 30 minutes. The veneers were pressed between hot plates at 130 °C under a pressure of 10 $kg/cm^2$ for 90 seconds. Thus,there was obtained a plywood. A test piece of this plywood was tested for bond strength after boiling for 72 hours according to the Japanese Agricultural Standard. The bond strength was 18.3 $kg/cm^2$. For the purpose of comparison, a commercial plywood (weather-and-boil-proof) bonded with phenolic resin adhesive was also tested for bond strength in the same manner. The bond strength was 9.2 $kg/cm^2$.

Comparative Example 6

The same procedure as in Example 10 was repeated except that the liquid adhesive was prepared from 100 parts of the solution of the amino resin [I-4], 20.0 parts of wheat flour, and 0.5 parts of ammonium chloride. The thus obtained plywood was tested for bond strength after boiling. The bond strength was 7.6 $kg/cm^2$.

Example 11

An unsaturated polyester having an acid value of 20 was obtained from 50 parts of isophthalic acid, 70 parts of maleic anhydride, 34 parts of ethylene glycol, and 38 parts of propylene glycol by the esterification reaction at 200 °C for 24 hours under a nitrogen stream. This unsaturated polyester (40.6 parts) was mixed with 50.4 parts of styrene to give the unsaturated polyester resin [I-5].

One hundred parts of this unsaturated polyester resin [I-5] were mixed with 18 parts of the treated inorganic filler (1) obtained in Referential Example 10 to give the low-shrinkage thermosetting resin composition (10).

The thus obtained resin composition (10) was mixed by stirring with 1 part of t-butyl peroxybenzoate, 3 parts of zinc stearate, blue toner ("KP-5E326" made by Sumika Color Co., Ltd.), and 100 parts of calcium carbonate. The resulting paste was mixed with 1.0 part of magnesium oxide to give an impregnant. With this impregnant were impregnated 70.7 parts of glass fiber (25 mm long). The impregnated glass fibers were made into a sheet between two polyethylene films. After aging at 40 °C for 40 hours, there was obtained a SMC. This SMC underwent press molding using a mold measuring 300 mm by 300 mm, at 140 °C and 50 $kg/cm^2$, for 4 minutes. Thus,there was obtained a 2-mm thick flat plate.

The molding shrinkage of this SMC was 0.07% when measured according to JIS K-6911. The surface of the molded item was tested for gloss using a surface gloss meter. The reflectance at the incident angle of 60° was 86.2%. The molded item was examined for discoloration and the mold was examined for mold staining. The discoloration and mold staining were given any one of four rankings - good, fair, poor, and bad. The results are shown in Table 4.

Examples 12 to 14

The same procedure as in Example 11 was repeated except that the treated inorganic filler (1) was replaced by the treated inorganic fillers (2), (3), and (4) obtained in Referential Examples 2 to 4, respectively. Thus,there were obtained low-shrinkage thermosetting resin compositions (12) to (14). They were made into SMC and the SMC was made into a molded article in the same manner as in Example 11. The performance of the molded article was evaluated. The results are shown in Table 4.

Comparative Examples 7 to 10

The same procedure as in Example 11 was repeated to give the comparative resin compositions (4′) to (7′), except that the treated inorganic filler (1) was replaced by the comparative treated inorganic fillers (1′) and (2′) obtained in Comparative Referential Examples 3 and 4, a commercial polystyrene-based shrinkage reducing agent and a commercial polyvinyl acetate-based shrinkage reducing agent, respectively. They were made into SMC and the SMC was made into a molded article in the same manner as in Example 11. The performance of the molded article was evaluated. The results are shown in Table 4.

Table 4

| | Example No. | | | | Comparative Example | | | |
|---|---|---|---|---|---|---|---|---|
| | 11 | 12 | 13 | 14 | 7 | 8 | 9 | 10 |
| Resin composition | (9) | (10) | (11) | (12) | - | - | - | - |
| Comparative resin composition | - | - | - | - | (4′) | (5′) | (6′) | (7′) |
| Shrinkage reducing agent | Treated filler (1) | Treated filler (2) | Treated filler (3) | Treated filler (4) | Compar. treated filler (1′) | Compar. treated filler (2′) | polystyrene | polyvinyl acetate |
| Molding shrinkage (%) *1 | 0.07 | 0.08 | 0.09 | 0.08 | 0.15 | 0.11 | 0.13 | 0.18 |
| Gloss (%) *2 | 88.2 | 83.6 | 87.1 | 85.4 | 81.3 | 80.5 | 82.6 | 78.9 |
| Discoloration *3 | good | good | good | good | poor | poor | poor | poor |
| Mold staining *4 | good | good | good | good | fair | fair | poor | poor |

Note 1. Measured according to JIS K-6911.
Note 2. Reflectance at the incident angle of 60°.
Note 3. good: no discoloration, fair: slight discoloration, poor: discoloration, bad: severe discoloration.
Note 4. good: no mold staining, fair: slight mold staining, poor: mold staining, bad: severe mold staining.

It is noted from Table 4 that the low-shrinkage thermosetting resin composition of the present invention has a lower molding shrinkage than the conventional thermosetting resin composition containing the conventional shrinkage reducing agent or the comparative treated inorganic filler. In addition, it does not cause mold straining at the time of molding, and provides molded articles free of discoloration and having a high surface gloss.

## Claims

1. A low-shrinkage thermosetting resin composition which comprises a thermosetting resin [I] and a polymer [II] having in its molecule one or more than one kind of a functional group selected from the group consisting of aziridine group, oxazoline group, epoxy group, N-hydroxy-alkylamide group, and isocyanate group.

2. A low-shrinkage thermosetting resin composition as claimed in Claim 1, wherein the thermosetting resin [I] is a radical-polymerized resin.

3. A low-shrinkage thermosetting resin composition as claimed in Claim 2, wherein the thermosetting resin [I] is an unsaturated polyester resin.

4. A low-shrinkage thermosetting resin composition as claimed in Claim 2, wherein the thermosetting resin [I] is a vinyl ester resin.

5. A low-shrinkage thermosetting resin composition as claimed in Claim 1, wherein the thermosetting resin [I] is an amino thermosetting resin.

6. A low-shrinkage thermosetting resin composition as claimed in Claim 1, wherein the polymer [II] is a homopolymer produced from one kind of a polymerizable monomer (a) or a copolymer produced from two or more kinds of polymerizable monomers (a), said polymerizable monomer (a) having in its molecule one or more than one kind of a functional group selected from the group consisting of aziridine group, oxazoline group, epoxy group, N-hydroxyalkylamide group, and isocyanate group, and also having a reactive double bond.

7. A low-shrinkage thermosetting resin composition as claimed in Claim 1, wherein the polymer [II] is a copolymer produced from a polymerizable monomer (a) and another polymerizable monomer (b), said polymerizable monomer (a) having in its molecule one or more than one kind of a functional group selected from the group consisting of aziridine group, oxazoline group, epoxy group, N-hydroxyalkylamide group, and isocyanate group, and also having a polymerizable double bond.

8. A low-shrinkage thermosetting resin composition as claimed in Claim 7, wherein the polymerizable monomer (a) accounts for 0.1 to 50 wt% in the polymer [II].

9. A low-shrinkage thermosetting resin composition as claimed in Claim 1, wherein the polymer [II] accounts for 0.05 to 50 wt%.

10. A low-shrinkage thermosetting resin composition as claimed in Claim 1, wherein the polymer [II] is in the form of surface-coating on an inorganic filler.

11. A low-shrinkage thermosetting resin composition as claimed in Claim 1, which further comprises an inorganic filler.

12. Use of a low-shrinkage thermosetting resin composition as claimed in any of claims 1 to 11 for the preparation of molded articles.

13. Use of the low-shrinkage thermosetting resin composition as claimed in any of claims 1 to 11 as adhesive.